# EUROPEAN PATENT APPLICATION

(11) **EP 4 089 822 A1**
(43) Date of publication of application: **16.11.2022**
(21) Application number: 21859773.0
(22) Date of filing: 10.06.2021
(51) Int. Cl.: H01M 50/409, H01M 50/40, H01M 10/0525, H01M 10/42

(54) **LITHIUM REPLENISHING DIAPHRAGM AND PREPARATION METHOD FOR LITHIUMREPLENISHING DIAPHRAGM**

(30) Priority: 28.08.2020 CN 202010885087
(71) Applicant: Chongqing Jimat New Material Technology Co., Ltd., Qijiang District, Chongqing 401421 (CN)
(72) Inventor: ZANG, Shiwei, Chongqing 401421 (CN); LIU, Wenqing, Chongqing 401421 (CN)
(74) Representative: Grünecker Patent- und Rechtsanwälte PartG mbB
(86) International application number: PCT/CN2021/099482
(87) International publication number: WO 2022/041929

(57) **Abstract**

The present invention discloses a lithium replenishing diaphragm and a preparation method for the lithium replenishing diaphragm in the technical field of lithium batteries. The lithium replenishing diaphragm comprises in mass percentage: 50-60% of a halogen high-molecular polymer base material, 5-10% of a toughening agent, 5-10% of a flame retardant, and 20-40% of a lithium salt. During the preparation process, the proportioned raw materials are uniformly mixed and placed in a feeding device of a film blowing machine, a film is formed by means of film blowing of the film blowing machine, the film is baked in a drying oven and then wound, and the final lithium replenishing diaphragm is obtained. The present invention solves the defects of high cost, poor heat resistance and poor tensile strength of a diaphragm in the prior art, which can not only greatly reduce the corresponding cost, but also ensure a better thermal stability and a higher toughness of a final product.

## Description

### Technical Field

The present invention relates to the technical field of lithium batteries, and in particular to a lithium replenishing diaphragm and a preparation method for the lithium replenishing diaphragm.

### Background

Due to the increase of fossil energy consumption, pollution problem has attracted more and more attention, therefore more and more attention is paid to cleaner energy. Among which, lithium batteries have excellent characteristics such as high energy density and high output voltage, and rapidly become popular throughout the world. However, although lithium batteries have the obvious advantages mentioned above, with the development of technology, people have higher and higher requirements for lithium batteries. For example, lithium batteries are required to have high energy density and safety performance, and at the same time, are required to be economic and practical.

In the first charging and discharging process of a lithium-ion battery, a SEI film will be formed on the surface of a negative electrode, thus consuming a certain amount of lithium ions, resulting in a lower energy density of the lithium-ion battery than a theoretical value. In order to solve the problem, lithium replenishing technology emerges.

At present, lithium replenishing of a lithium-ion battery is generally performed by coating a lithium replenishing layer on a diaphragm of the lithium ion battery. However, the way of coating a lithium replenishing layer on the diaphragm has many defects: on one hand, unnecessary substances such as a binder need to be added to the lithium replenishing layer, which increases the thickness of a product and unnecessary raw material pollution; on the other hand, the porous diaphragm bearing the lithium replenishing layer also needs to be purchased from an upstream enterprise, which has a high cost; in addition, the temperature resistance and tensile strength of the diaphragm obtained are not good, which leads to a low safety performance of the battery. Therefore, the development of lithium-ion batteries is greatly limited by the above defects.

### Summary

In order to overcome the defects of high cost, poor heat resistance and poor tensile strength of a lithium replenishing diaphragm in the prior art, the present invention provides a lithium replenishing diaphragm and a preparation method for the lithium replenishing diaphragm.

The present invention has the following technical solution:
On one hand, a lithium replenishing diaphragm, the raw materials of which comprises a halogen high-molecular polymer base material, a toughening agent, a flame retardant, and a lithium salt, wherein:
The halogen high-molecular polymer base material accounts for 50-60%, the toughening agent accounts for 5-10%, the flame retardant accounts for 5-10%, and the lithium salt accounts for 20-40%.

The present invention according to the above solution, wherein the lithium replenishing diaphragm has a thickness of 16-23 µm.

The present invention according to the above solution, wherein the lithium replenishing diaphragm, when immersed in an electrolyte, has a porosity of 80-90%, and the average diameter of each pore is 30-60 nm.

The present invention according to the above solution, wherein the halogen high-molecular polymer base material comprises one or more of a chlorinated high-molecular polymer, a brominated high-molecular polymer and a fluorinated high-molecular polymer.

Further, the chlorinated high-molecular polymer is one or more of polyvinyl chloride, chlorinated polyvinyl chloride and polyvinylidene chloride.

Further, the brominated high-molecular polymer is one or more of a brominated butadiene copolymer, a brominated polybutadiene polymer and a brominated polystyrene copolymer.

Further, the fluorinated high-molecular polymer is one or more of polytetrafluoroethylene, polyvinylidene fluoride, a fluorinated ethylene propylene copolymer and polyvinyl fluoride.

The present invention according to the above solution, wherein the toughening agent comprises an ethylene-vinyl acetate copolymer and an acrylonitrile-butadiene-styrene copolymer.

Further, the mass ratio of the ethylene-vinyl acetate copolymer to the acrylonitrile-butadiene-styrene copolymer is 4:6.

The present invention according to the above solution, wherein the flame retardant comprises decabromodiphenylethane and tetrabromobisphenol A bis (2,3-dibromopropyl) ether.

Further, the mass ratio of the decabromodiphenylethane to the tetrabromobisphenol A bis (2,3-dibromopropyl) ether is 3:7.

The present invention according to the above solution, wherein the lithium salt accounts for 10-20% of the total mass of all the raw materials.

The present invention according to the above solution, wherein the lithium salt has a particle diameter of 1.5-2 µm.

The lithium salt comprises one or more of perchlorate, lithium tetrafluoroborate, lithium hexafluoroarsenate, lithium hexafluorophosphate, lithium bis(oxalate) borate, lithium difluoro(oxalato) borate, imidodisulfuryl fluoride lithium salt and bistrifluoromethanesulfonimide lithium salt.

On the other hand, a preparation method for the lithium replenishing diaphragm mentioned above, comprising the steps: mixing the halogen high-molecular polymer base material, the toughening agent, the flame retardant and the lithium salt uniformly according to proportions and placing them in a feeding device of a film blowing machine, and forming a film with a thickness of 16-23 µm by means of film blowing of the film blowing machine; baking the film in a drying oven and winding afterwards, and obtaining the final lithium replenishing diaphragm.

The present invention according to the above solution, wherein the nitrogen flow velocity of the film blowing machine is 20-23 m/min.

The present invention according to the above solution, wherein the film is placed in the drying oven at 60-70°C and baked for 1-2 h.

The present invention according to the above solution has the following beneficial effects:
(1) When the lithium replenishing diaphragm of the present invention is assembled in a lithium battery, as the lithium salt can be dissolved in the electrolyte, the present invention can not only provide the lithium ions consumed by the first charging and discharging, but also provide lithium ions continuously, so as to replenish the lithium ions gradually consumed in multiple charging and discharging processes of the lithium battery, thus keeping the energy density of the lithium ions at a relatively high level;
(2) The present invention does not require to add additional components such as a foaming agent and a binder, and does not require to purchase a porous diaphragm from an upstream enterprise, so the cost is greatly reduced;
(3) With the application of the halogen high-molecular polymer base material in the present invention, the thermal stability of the lithium replenishing diaphragm is increased, and at the same time, the toughness of the product is also greatly improved.

### Detailed Description

The present invention will be further described below in combination with the embodiments.

A lithium replenishing diaphragm, the raw materials of which comprises a halogen high-molecular polymer base material, a toughening agent, a flame retardant, and a lithium salt, wherein according to the proportions of the raw materials: the halogen high-molecular polymer base material accounts for 50-60%, the toughening agent accounts for 5-10%, the flame retardant accounts for 5-10%, and the lithium salt accounts for 20-40%.

In the present invention, the lithium salt has a particle diameter of 1.5-2 µm. Specifically, the lithium salt can be selected to be one or more of perchlorate, lithium tetrafluoroborate, lithium hexafluoroarsenate, lithium hexafluorophosphate, lithium bis(oxalate) borate, lithium difluoro(oxalato) borate, imidodisulfuryl fluoride lithium salt and bistrifluoromethanesulfonimide lithium salt.

In the present invention, the halogen high-molecular polymer itself has a relatively high thermal stability because of containing halogen atoms, so the heat resistance is greatly improved. Specifically, the halogen high-molecular polymer base material comprises one or more of a chlorinated high-molecular polymer, a brominated high-molecular polymer and a fluorinated high-molecular polymer.

Among which, the chlorinated high-molecular polymer is one or more of polyvinyl chloride, chlorinated polyvinyl chloride and polyvinylidene chloride; the brominated high-molecular polymer is one or more of a brominated butadiene copolymer, a brominated polybutadiene polymer and a brominated polystyrene copolymer; and the fluorinated high-molecular polymer is one or more of polytetrafluoroethylene, polyvinylidene fluoride, a fluorinated ethylene propylene copolymer and polyvinyl fluoride.

In the present invention, the toughening agent comprises an ethylene-vinyl acetate copolymer and an acrylonitrile-butadiene-styrene copolymer. In the present invention, the mass ratio of the ethylene-vinyl acetate copolymer to the acrylonitrile-butadiene-styrene copolymer is 4:6.

In the present invention, the flame retardant comprises decabromodiphenylethane and tetrabromobisphenol A bis (2,3-dibromopropyl) ether. In the present invention, the mass ratio of the decabromodiphenylethane to the tetrabromobisphenol A bis (2,3-dibromopropyl) ether is 3:7.

In the present invention, the lithium replenishing diaphragm has a thickness of 16-23 µm, which will neither cause large mass of the product due to overlarge volume of the lithium replenishing diaphragm, nor affect the tensile strength of the product; by adopting the lithium replenishing diaphragm of such thickness, the present invention can achieve a balance among the thickness, the mass and the tensile strength.

When immersed in an electrolyte, the lithium replenishing diaphragm of the present invention has a porosity of 70-80%, and the average diameter of each pore is 30-60 nm. The pores formed by the lithium salt dissolved in the electrolyte facilitate the passage of lithium ions; on one hand, the present invention can avoid a situation that the pores of the diaphragm are blocked by impurities generated by a side reaction in the electrolyte during long-term use and thus the internal resistance of the battery is increased; on the other hand, in a production process, the present invention does not require complex steps such as adding a foaming agent to form pores or separately coating a lithium replenishing layer on a porous film, and does not require to separately purchase an expensive porous diaphragm from an upstream enterprise, so the cost of the product can be greatly reduced.

A preparation method for the lithium replenishing diaphragm, comprising the steps: mixing 50-60% of the halogen high-molecular polymer base material, 5-10% of the toughening agent, 5-10% of the flame retardant and 20-40% of the lithium salt uniformly according to mass proportions and placing them in a feeding device of a film blowing machine, and forming a film with a thickness of 16-23 µm by means of film blowing of the film blowing machine; baking the film in a drying oven and winding afterwards, and obtaining the final lithium replenishing diaphragm.

Preferably, the nitrogen flow velocity of the film blowing machine is 20-23 m/min.

Preferably, the film is placed in the drying oven at 60-70°C and baked for 1-2 h.

After applied to a lithium ion battery, the lithium replenishing diaphragm prepared by the above technology and raw materials can not only replenish the lithium ions consumed during in the first charging and discharging process, but also have a better thermal stability due to the adoption of the halogen high-molecular polymer base material, and the toughness of the lithium replenishing diaphragm is increased by the toughening agent. In addition, the present invention greatly reduces the cost and is beneficial to the development of lithium ion batteries due to the few raw materials contained and the few steps for producing the lithium replenishing diaphragm of the present invention.

### Preparation of embodiment 1

(1) Preparation of the lithium replenishing diaphragm using the raw materials of the following mass proportions:
   The halogen high-molecular polymer base material accounts for 56%, the toughening agent accounts for 8%, the flame retardant accounts for 8%, and the lithium salt accounts for 28%.

In the embodiment, the halogen high-molecular polymer base material is a mixture of polyvinyl chloride, a brominated butadiene copolymer and polytetrafluoroethylene with a mass ratio of 1:1:3; the toughening agent is a mixture of an ethylene-vinyl acetate copolymer and an acrylonitrile-butadiene-styrene copolymer with a mass ratio of 4:6; and the flame retardant is a mixture of decabromodiphenylethane and tetrabromobisphenol A bis (2,3-dibromopropyl) ether with a mass ratio of 3:7.

### (2) Preparation process:

The halogen high-molecular polymer base material, the toughening agent, the flame retardant and the lithium salt are uniformly mixed according to the above mass proportions and placed in a feeding device of a film blowing machine, and a film with a thickness of 23 µm is formed by means of film blowing of the film blowing machine, wherein the nitrogen flow velocity of the film blowing machine is 20 m/min; the film is baked for 1 h in a drying oven at 70°C and then wound, and the final lithium replenishing diaphragm is obtained.

### Preparation of embodiment 2

(1) Preparation of the lithium replenishing diaphragm using the raw materials of the following mass proportions:
   The halogen high-molecular polymer base material accounts for 51%, the toughening agent accounts for 9%, the flame retardant accounts for 7%, and the lithium salt accounts for 33%.

In the embodiment, the halogen high-molecular polymer base material is chlorinated polyvinyl chloride; the toughening agent is a mixture of an ethylene-vinyl acetate copolymer and an acrylonitrile-butadiene-styrene copolymer with a mass ratio of 4:6; and the flame retardant is a mixture of decabromodiphenylethane and tetrabromobisphenol A bis (2,3-dibromopropyl) ether with a mass ratio of 3:7.

### (2) Preparation process:

The halogen high-molecular polymer base material, the toughening agent, the flame retardant and the lithium salt are uniformly mixed according to the above mass proportions and placed in a feeding device of a film blowing machine, and a film with a thickness of 16 µm is formed by means of film blowing of the film blowing machine, wherein the nitrogen flow velocity of the film blowing machine is 23 m/min; the film is baked for 2 h in a drying oven at 60°C and then wound, and the final lithium replenishing diaphragm is obtained.

### Preparation of embodiment 3

(1) Preparation of the lithium replenishing diaphragm using the raw materials of the following mass proportions:
   The halogen high-molecular polymer base material accounts for 60%, the toughening agent accounts for 7%, the flame retardant accounts for 8%, and the lithium salt accounts for 25%.

In the embodiment, the halogen high-molecular polymer base material is polyvinylidene chloride; the toughening agent is a mixture of an ethylene-vinyl acetate copolymer and an acrylonitrile-butadiene-styrene copolymer with a mass ratio of 4:6; and the flame retardant is a mixture of decabromodiphenylethane and tetrabromobisphenol A bis (2,3-dibromopropyl) ether with a mass ratio of 3:7.

### (2) Preparation process:

The halogen high-molecular polymer base material, the toughening agent, the flame retardant and the lithium salt are uniformly mixed according to the above mass proportions and placed in a feeding device of a film blowing machine, and a film with a thickness of 18 µm is formed by means of film blowing of the film blowing machine, wherein the nitrogen flow velocity of the film blowing machine is 21 m/min; the film is baked for 1.5 h in a drying oven at 65°C and then wound, and the final lithium replenishing diaphragm is obtained.

### Preparation of embodiment 4

(1) Preparation of the lithium replenishing diaphragm using the raw materials of the following mass proportions:
   The halogen high-molecular polymer base material accounts for 53%, the toughening agent accounts for 7%, the flame retardant accounts for 5%, and the lithium salt accounts for 35%.

In the embodiment, the halogen high-molecular polymer base material is a mixture of a brominated polybutadiene polymer and polyvinylidene fluoride with a mass ratio of 2:3; the toughening agent is a mixture of an ethylene-vinyl acetate copolymer and an acrylonitrile-butadiene-styrene copolymer with a mass ratio of 4:6; and the flame retardant is a mixture of decabromodiphenylethane and tetrabromobisphenol A bis (2,3-dibromopropyl) ether with a mass ratio of 3:7.

### (2) Preparation process:

The halogen high-molecular polymer base material, the toughening agent, the flame retardant and the lithium salt are uniformly mixed according to the above mass proportions and placed in a feeding device of a film blowing machine, and a film with a thickness of 22 µm is formed by means of film blowing of the film blowing machine, wherein the nitrogen flow velocity of the film blowing machine is 22 m/min; the film is baked for 1.5 h in a drying oven at 68°C and then wound, and the final lithium replenishing diaphragm is obtained.

### Preparation of embodiment 5

(1) Preparation of the lithium replenishing diaphragm using the raw materials of the following mass proportions:
   The halogen high-molecular polymer base material accounts for 58%, the toughening agent accounts for 6%, the flame retardant accounts for 6%, and the lithium salt accounts for 30%.

In the embodiment, the halogen high-molecular polymer base material is polyvinyl chloride; the toughening agent is a mixture of an ethylene-vinyl acetate copolymer and an acrylonitrile-butadiene-styrene copolymer with a mass ratio of 4:6; and the flame retardant is a mixture of decabromodiphenylethane and tetrabromobisphenol A bis (2,3-dibromopropyl) ether with a mass ratio of 3:7.

### (2) Preparation process:

The halogen high-molecular polymer base material, the toughening agent, the flame retardant and the lithium salt are uniformly mixed according to the above mass proportions and placed in a feeding device of a film blowing machine, and a film with a thickness of 17 µm is formed by means of film blowing of the film blowing machine, wherein the nitrogen flow velocity of the film blowing machine is 21 m/min; the film is baked for 2 h in a drying oven at 60°C and then wound, and the final lithium replenishing diaphragm is obtained.

### Preparation of embodiment 6

(1) Preparation of the lithium replenishing diaphragm using the raw materials of the following mass proportions:
   The halogen high-molecular polymer base material accounts for 50%, the toughening agent accounts for 5%, the flame retardant accounts for 5%, and the lithium salt accounts for 40%.

In the embodiment, the halogen high-molecular polymer base material is a brominated polystyrene copolymer; the toughening agent is a mixture of an ethylene-vinyl acetate copolymer and an acrylonitrile-butadiene-styrene copolymer with a mass ratio of 4:6; and the flame retardant is a mixture of decabromodiphenylethane and tetrabromobisphenol A bis (2,3-dibromopropyl) ether with a mass ratio of 3:7.

### (2) Preparation process:

The halogen high-molecular polymer base material, the toughening agent, the flame retardant and the lithium salt are uniformly mixed according to the above mass proportions and placed in a feeding device of a film blowing machine, and a film with a thickness of 20 µm is formed by means of film blowing of the film blowing machine, wherein the nitrogen flow velocity of the film blowing machine is 23 m/min; the film is baked for 1 h in a drying oven at 70°C and then wound, and the final lithium replenishing diaphragm is obtained.

### Preparation of embodiment 7

(1) Preparation of the lithium replenishing diaphragm using the raw materials of the following mass proportions:
   The halogen high-molecular polymer base material accounts for 60%, the toughening agent accounts for 10%, the flame retardant accounts for 10%, and the lithium salt accounts for 20%.

In the embodiment, the halogen high-molecular polymer base material is a mixture of a fluorinated ethylene propylene copolymer and polyvinyl fluoride with a mass ratio of 3:5; the toughening agent is a mixture of an ethylene-vinyl acetate copolymer and an acrylonitrile-butadiene-styrene copolymer with a mass ratio of 4:6; and the flame retardant is a mixture of decabromodiphenylethane and tetrabromobisphenol A bis (2,3-dibromopropyl) ether with a mass ratio of 3:7.

### (2) Preparation process:

The halogen high-molecular polymer base material, the toughening agent, the flame retardant and the lithium salt are uniformly mixed according to the above mass proportions and placed in a feeding device of a film blowing machine, and a film with a thickness of 22 µm is formed by means of film blowing of the film blowing machine, wherein the nitrogen flow velocity of the film blowing machine is 20 m/min; the film is baked for 1.5 h in a drying oven at 60°C and then wound, and the final lithium replenishing diaphragm is obtained.

### Preparation of embodiment 8

(1) Preparation of the lithium replenishing diaphragm using the raw materials of the following mass proportions:
   The halogen high-molecular polymer base material accounts for 60%, the toughening agent accounts for 6%, the flame retardant accounts for 9%, and the lithium salt accounts for 25%.

In the embodiment, the halogen high-molecular polymer base material is polytetrafluoroethylene; the toughening agent is a mixture of an ethylene-vinyl acetate copolymer and an acrylonitrile-butadiene-styrene copolymer with a mass ratio of 4:6; and the flame retardant is a mixture of decabromodiphenylethane and tetrabromobisphenol A bis (2,3-dibromopropyl) ether with a mass ratio of 3:7.

### (2) Preparation process:

The halogen high-molecular polymer base material, the toughening agent, the flame retardant and the lithium salt are uniformly mixed according to the above mass proportions and placed in a feeding device of a film blowing machine, and a film with a thickness of 19 µm is formed by means of film blowing of the film blowing machine, wherein the nitrogen flow velocity of the film blowing machine is 21 m/min; the film is baked for 1 h in a drying oven at 70°C and then wound, and the final lithium replenishing diaphragm is obtained.

### Preparation of embodiment 9

(1) Preparation of the lithium replenishing diaphragm using the raw materials of the following mass proportions:
   The halogen high-molecular polymer base material accounts for 50%, the toughening agent accounts for 10%, the flame retardant accounts for 10%, and the lithium salt accounts for 30%.

In the embodiment, the halogen high-molecular polymer base material is a mixture of polyvinylidene fluoride and a fluorinated ethylene propylene copolymer with a mass ratio of 1:2; the toughening agent is a mixture of an ethylene-vinyl acetate copolymer and an acrylonitrile-butadiene-styrene copolymer with a mass ratio of 4:6; and the flame retardant is a mixture of decabromodiphenylethane and tetrabromobisphenol A bis (2,3-dibromopropyl) ether with a mass ratio of 3:7.

### (2) Preparation process:

The halogen high-molecular polymer base material, the toughening agent, the flame retardant and the lithium salt are uniformly mixed according to the above mass proportions and placed in a feeding device of a film blowing machine, and a film with a thickness of 20 µm is formed by means of film blowing of the film blowing machine, wherein the nitrogen flow velocity of the film blowing machine is 20 m/min; the film is baked for 1.5 h in a drying oven at 68°C and then wound, and the final lithium replenishing diaphragm is obtained.

### Preparation of embodiment 10

(1) Preparation of the lithium replenishing diaphragm using the raw materials of the following mass proportions:
   The halogen high-molecular polymer base material accounts for 55%, the toughening agent accounts for 5%, the flame retardant accounts for 5%, and the lithium salt accounts for 35%.

In the embodiment, the halogen high-molecular polymer base material is polyvinyl fluoride; the toughening agent is a mixture of an ethylene-vinyl acetate copolymer and an acrylonitrile-butadiene-styrene copolymer with a mass ratio of 4:6; and the flame retardant is a mixture of decabromodiphenylethane and tetrabromobisphenol A bis (2,3-dibromopropyl) ether with a mass ratio of 3:7.

### (2) Preparation process:

The halogen high-molecular polymer base material, the toughening agent, the flame retardant and the lithium salt are uniformly mixed according to the above mass proportions and placed in a feeding device of a film blowing machine, and a film with a thickness of 20 µm is formed by means of film blowing of the film blowing machine, wherein the nitrogen flow velocity of the film blowing machine is 20 m/min; the film is baked for 1.5 h in a drying oven at 64°C and then wound, and the final lithium replenishing diaphragm is obtained.

### Control experiment 1: heat resistance test

A lithium replenishing diaphragm is prepared according to the above method and raw materials, and cut into 10 long lithium replenishing diaphragm strips which are 20 cm in length and 2 cm in width to form samples 1 to 10. A lithium replenishing diaphragm prepared by the prior art (a lithium replenishing diaphragm prepared by the technology of a patent No. CN201920394809.5 is used in the present invention) is cut to form control samples of the same size, i.e., control samples 1 to 10.

The above samples are placed in a drying oven at 130°C and baked for 1 h, and are cooled at room temperature after being taken out. The length and width of each sample are measured, the expansion rate thereof is recorded, and the heat resistance of each product is evaluated by the expansion rate. Expansion rate = (initial length - length after drying oven experiment) / initial length × 100%. The experimental results are shown in Table 1 and Table 2 as follows:

**Table 1: Test results of expansion rates of experimental samples**

| Experimental group | Expansion rates (%) |
|---|---|
| Sample 1 | 0.15 |
| Sample 2 | 0.20 |
| Sample 3 | 0.18 |
| Sample 4 | 0.23 |
| Sample 5 | 0.19 |
| Sample 6 | 0.18 |
| Sample 7 | 0.22 |
| Sample 8 | 0.23 |
| Sample 9 | 0.17 |
| Sample 10 | 0.15 |

**Table 2: Test results of expansion rates of control sample group**

| Experimental group | Expansion rates (%) |
|---|---|
| Control sample 1 | 13.2 |
| Control sample 2 | 14 |
| Control sample 3 | 13.7 |
| Control sample 4 | 12.4 |
| Control sample 5 | 12.9 |
| Control sample 6 | 13.3 |
| Control sample 7 | 12.6 |
| Control sample 8 | 13.8 |
| Control sample 9 | 12.5 |
| Control sample 10 | 12.9 |

It can be known from the above control experiment that: the expansion rates of the lithium replenishing diaphragm of the present invention are all below 0.23%, whereas the expansion rates of the control samples are all above 12.4%, i.e., the lithium replenishing diaphragm of the present invention is not easy to expand when heated, and the heat resistance thereof is obviously superior to that of the traditional diaphragm product.

### Control experiment 2: tensile strength test

A lithium replenishing diaphragm is prepared according to the above method and raw materials, and cut into 10 long lithium replenishing diaphragm strips which are 20 cm in length and 2 cm in width to form samples 1 to 10. A lithium replenishing diaphragm prepared by the prior art (a lithium replenishing diaphragm prepared by the technology of a patent No. CN201920394809.5 is used in the present invention) is cut to form control samples of the same size, i.e., control samples 1 to 10.

Both ends of each sample are respectively fixed to clamps on an upper and a lower ends of a tensile strength measuring instrument, and tensile strengths are measured at a velocity of 100 mm/min. Specifically, forces are applied along upward and downward directions, and the strength when a test piece is broken is marked as a tensile strength, with the unit being kgf/cm². The experimental results are shown in Table 3 and Table 4 as follows:

**Table 3: Test results of tensile strengths of experimental samples**

| Experimental group | Tensile strengths (kgf/cm²) |
|---|---|
| Sample 1 | 6.732 |
| Sample 2 | 6.884 |
| Sample 3 | 6.679 |
| Sample 4 | 6.689 |
| Sample 5 | 6.920 |
| Sample 6 | 6.873 |
| Sample 7 | 6.764 |
| Sample 8 | 6.992 |
| Sample 9 | 7.022 |
| Sample 10 | 7.003 |

**Table 4: Test results of tensile strengths of control sample group**

| Experimental group | Tensile strengths (kgf/cm²) |
|---|---|
| Control sample 1 | 4.775 |
| Control sample 2 | 4.673 |
| Control sample 3 | 4.893 |
| Control sample 4 | 4.436 |
| Control sample 5 | 4.821 |
| Control sample 6 | 4.792 |
| Control sample 7 | 4.553 |
| Control sample 8 | 4.592 |
| Control sample 9 | 4.339 |
| Control sample 10 | 4.881 |

It can be known from the above control experiment that: the tensile strengths of the lithium replenishing diaphragm of the present invention are all above 6.670 kgf/cm², whereas the tensile strengths of the control samples are all below 4.900 kgf/cm², i.e., the lithium replenishing diaphragm of the present invention can withstand a higher tensile strength, and the stability of the product is better.

The lithium replenishing diaphragm of the present invention can provide lithium ions continuously to keep the energy density of a lithium ion battery always at a relatively high level, and at the same time, the whole product has a low cost, a better thermal stability and a higher toughness.

It should be understood that, for those ordinary skilled in the art, improvements and alternations can be made according to the above description, and all these improvements and alternations shall belong to the protection scope of appended claims of the present invention.

The patent of present invention is exemplarily described above. Obviously, the implementation of the patent of the present invention is not limited by the above modes. Various improvements made by adopting the method ideas and technical solutions of the patent of the present invention or the ideas and technical solutions of the patent of the present invention directly applied to other occasions without improvements shall be within the protection scope of the present invention.

When assembled in a lithium battery, the lithium replenishing diaphragm of the present invention can provide lithium ions continuously, so as to replenish the lithium ions gradually consumed in multiple charging and discharging processes of the lithium battery, thus keeping the energy density of the lithium ions at a relatively high level; the present invention does not require to add additional components such as a foaming agent and a binder, and does not require to additionally purchase a porous diaphragm, so the cost is greatly reduced; with the application of the halogen high-molecular polymer base material in the present invention, the thermal stability of the lithium replenishing diaphragm is increased, and at the same time, the toughness of the product is also greatly improved, therefore, the lithium replenishing diaphragm and the preparation method for the lithium replenishing diaphragm of the present invention have practicability.

## Claims

1. A lithium replenishing diaphragm, the raw materials of which comprises a halogen high-molecular polymer base material, a toughening agent, a flame retardant, and a lithium salt, wherein:
the halogen high-molecular polymer base material accounts for 50-60%, the toughening agent accounts for 5-10%, the flame retardant accounts for 5-10%, and the lithium salt accounts for 20-40%.

2. The lithium replenishing diaphragm according to claim 1, wherein the lithium replenishing diaphragm, when immersed in an electrolyte, has a porosity of 80-90%, and the average diameter of each pore is 30-60 nm.

3. The lithium replenishing diaphragm according to claim 1, wherein the halogen high-molecular polymer base material comprises one or more of a chlorinated high-molecular polymer, a brominated high-molecular polymer and a fluorinated high-molecular polymer.

4. The lithium replenishing diaphragm according to claim 1, wherein the toughening agent comprises an ethylene-vinyl acetate copolymer and an acrylonitrile-butadiene-styrene copolymer.

5. The lithium replenishing diaphragm according to claim 1, wherein the flame retardant comprises decabromodiphenylethane and tetrabromobisphenol A bis (2,3-dibromopropyl) ether.

6. The lithium replenishing diaphragm according to claim 1, wherein the lithium salt accounts for 10-20% of the total mass of all the raw materials.

7. The lithium replenishing diaphragm according to claim 1 or 6, wherein the lithium salt comprises one or more of perchlorate, lithium tetrafluoroborate, lithium hexafluoroarsenate, lithium hexafluorophosphate, lithium bis(oxalate) borate, lithium difluoro(oxalato) borate, imidodisulfuryl fluoride lithium salt and bistrifluoromethanesulfonimide lithium salt.

8. A preparation method for the lithium replenishing diaphragm according to any one of claims 1-7, comprising the steps:
mixing the halogen high-molecular polymer base material, the toughening agent, the flame retardant and the lithium salt uniformly according to proportions and placing them in a feeding device of a film blowing machine;
forming a film by means of film blowing of the film blowing machine;
baking the film in a drying oven and winding afterwards;
obtaining the final lithium replenishing diaphragm.

9. The preparation method for the lithium replenishing diaphragm according to claim 8, wherein the nitrogen flow velocity of the film blowing machine is 20-23 m/min.

10. The preparation method for the lithium replenishing diaphragm according to claim 8, wherein the film is placed in the drying oven at 60-70°C and baked for 1-2 h.
